# EUROPEAN PATENT SPECIFICATION

(11) **EP 3 222 439 B1**
(45) Date of publication and mention of the grant of the patent: **11.03.2020**
(21) Application number: 17157567.3
(22) Date of filing: 23.02.2017
(51) Int. Cl.: B60B 1/08, B60B 3/00, B60B 3/02, B60B 3/06, B60B 3/10

(54) **CAST WHEEL AND SADDLE-RIDE TYPE VEHICLE**
GUSSRAD UND SATTELFAHRZEUG
ROUE COULÉE ET VÉHICULE DE TYPE À SELLE

(30) Priority: 25.03.2016 JP 2016062352
(43) Date of publication of application: 27.09.2017
(73) Proprietor: Honda Motor Co., Ltd., Minato-ku Tokyo 107-8556 (JP)
(72) Inventor: KATAOKA, Keiko, Wako-shi, Saitama 351-0193 (JP); HATAI, Ayako, Wako-shi, Saitama 351-0193 (JP)
(74) Representative: Weickmann & Weickmann PartmbB

(56) References cited:
- EP-A1- 0 754 570
- EP-A2- 2 572 897
- US-A1- 2003 011 238
- US-A1- 2010 096 908

## Description

### [Technical Field]

The present invention relates to a cast wheel and a saddle-ride type vehicle.

### [Background Art]

Conventionally, it is known a cast wheel provided with a saddle-ride type vehicle or similar vehicle. The cast wheel includes a plurality of spokes that couple hubs to rims, and all the plurality of spokes have lightening portions (for example, see EP 0 754 570 A1).

EP 0 754 570 A1 shows a cast wheel comprising a plurality of paired spokes that couple a hub to a rim and that include a first spoke whose inside is lightened and a solid second spoke whose inside is also lightened, wherein the first spoke is adjacent to the second spoke and the paired spokes are equally spaced in a peripheral direction.

### [Summary of Invention]

### [Technical Problem]

Like the above-described conventional cast wheel, disposing the lightening portion at the spoke ensures a weight reduction while ensuring rigidity of a cast wheel. However, the lightening portion may influence an external appearance.

The present invention has been made in view of the above described related art, and it is an object of the present invention to ensure the improved external appearance while ensuring the rigidity of the cast wheel, at the cast wheel and a saddle-ride type vehicle including this cast wheel.

### [Solution to Problem]

In order to solve the above-mentioned object, the present invention provides a cast wheel according to claim 1.

According to the present invention, the paired spokes of the cast wheel include the lightened spoke whose inside is lightened and the solid spoke whose inside is not lightened, and the paired spokes where the lightened spoke is adjacent to the solid spoke are equally spaced in the peripheral direction. Thus, the spoke pair including the lightened spoke and the solid spoke ensures the rigidity. Additionally, the solid spoke is not lightened; thus, a removed part is obscure as the spoke pair to ensure improvement of the external appearance. Furthermore, the lightened spoke is adjacent to the solid spoke and the paired spokes are equally spaced in a peripheral direction.

Additionally, in the present invention, in an axial direction of a rotating axis (60a) of the cast wheel, a width of the solid spoke (72) is formed thinner than a width of the lightened spoke (71), and the solid spoke (72) is disposed ahead of the lightened spoke (71) in a rotation direction (R) of the cast wheel.

According to the present invention, in the axial direction of the rotating axis of the cast wheel, the width of the solid spoke is formed thinner than the width of the lightened spoke, and the solid spoke is disposed ahead of the lightened spoke in the rotation direction of the cast wheel. This ensures reduction of rotational load of the cast wheel since the thin solid spoke is positioned ahead of the lightened spoke in the rotation direction of the cast wheel to ensure effectively cutting through travelling air by the thin solid spoke.

Additionally, in the present invention, the spoke (64) includes an arched portion (77) that protrudes in an arched shape in an axial direction of a rotating axis (60a) of the cast wheel.

According to the present invention, the spoke includes the arched portion that protrudes in the arched shape in the axial direction of the rotating axis of the cast wheel to ensure effectively absorbing the load that the cast wheel receives at the arched portion.

Furthermore, in the present invention, the spoke (64) includes a coupling portion (73) that couples the solid spoke (72) to the lightened spoke (71), the coupling portion (73) is formed thicker than the solid spoke (72) and the lightened spoke (71), and the arched portion (77) is formed at the coupling portion (73).

According to the present invention, the coupling portion that couples the solid spoke to the lightened spoke is formed thicker than the solid spoke and the lightened spoke, and the arched portion is formed at the coupling portion. This ensures increasing strength of the arched portion to ensure effectively absorbing the load that the cast wheel receives, at the arched portion.

Additionally, in the present invention, a lightening deep portion (78) where a removal of the lightened spoke (71) is deepest in the axial direction of the rotating axis (60a) of the cast wheel is formed at a side of the rim (63) with respect to an arched top portion (77a) where the arched portion (77) protrudes most in the axial direction.

According to the present invention, the lightening deep portion where the removal of the lightened spoke is deepest in the axial direction of the rotating axis of the cast wheel is formed at the rim side with respect to the arched top portion where the arched portion protrudes most in the axial direction. This avoids the excessively deep removal at a side of the arched top portion, thus ensuring the strength of the coupling portion.

Additionally, the present invention provides a saddle-ride type vehicle including the cast wheel and a brake disc (52), and the brake disc (52) is secured to a lightening side of the lightened spoke (71) of the cast wheel.

According to the present invention, the saddle-ride type vehicle includes the cast wheel and the brake disc, and the brake disc is secured to the lightening side of the lightened spoke of the cast wheel; thus, the brake disc can hide the removal to ensure the improvement of the external appearance.

### [Advantageous Effects of Invention]

The cast wheel according to the present invention ensures the improvement of the external appearance while ensuring the rigidity.

Additionally, the travelling air can be effectively cut through, thus ensuring the reduction of the rotational load of the cast wheel.

Additionally, the load that the cast wheel receives can be effectively absorbed at the arched portion.

Furthermore, forming the arched portion at the coupling portion can increase the strength of the arched portion; thus, the arched portion can effectively absorb the load that the cast wheel receives.

Additionally, the removal at the arched top portion side is not excessively deepened, thus ensuring the strength of the coupling portion. Additionally, the rigidity and the external appearance of the cast wheel of the saddle-ride type vehicle can be improved.

### [Brief Description of Drawings]

[Fig. 1] Fig. 1 is a left side view of a saddle-ride type vehicle according to an embodiment of the present invention.
[Fig. 2] Fig. 2 is a left side view of a peripheral portion of a front wheel.
[Fig. 3] Fig. 3 is a right side view of the peripheral portion of the front wheel.
[Fig. 4] Fig. 4 is a left side view of a wheel.
[Fig. 5] Fig. 5 is a right side view of the wheel.
[Fig. 6] Fig. 6 is a cross-sectional view taken along line VI-VI in Fig. 5.
[Fig. 7A] Fig. 7A is a cross-sectional view of a spoke, and a cross-sectional view taken along line A-A in Fig. 5.
[Fig. 7B] Fig. 7B is a cross-sectional view of the spoke, and a cross-sectional view taken along line B-B in Fig. 5.
[Fig. 8] Fig. 8 is a cross-sectional view taken along line VIII-VIII in Fig. 5.
[Fig. 9] Fig. 9 is a cross-sectional view taken along line IX-IX in Fig. 5.

### [Description of Embodiments]

Hereinafter, an embodiment of the present invention will be described with reference to the accompanying drawings. It is to be noted that, throughout the description, references to directions, such as front, rear, left, right, upward, and downward, are made with respect to a vehicle body, unless otherwise stated. It is also to be noted that, in the drawings, reference sign FR denotes the front of the vehicle body, reference sign UP denotes the upper side of the vehicle body, and reference sign LH denotes the left of the vehicle body. It is also to be noted that, in the drawings, reference sign RH may denote the right of the vehicle body.

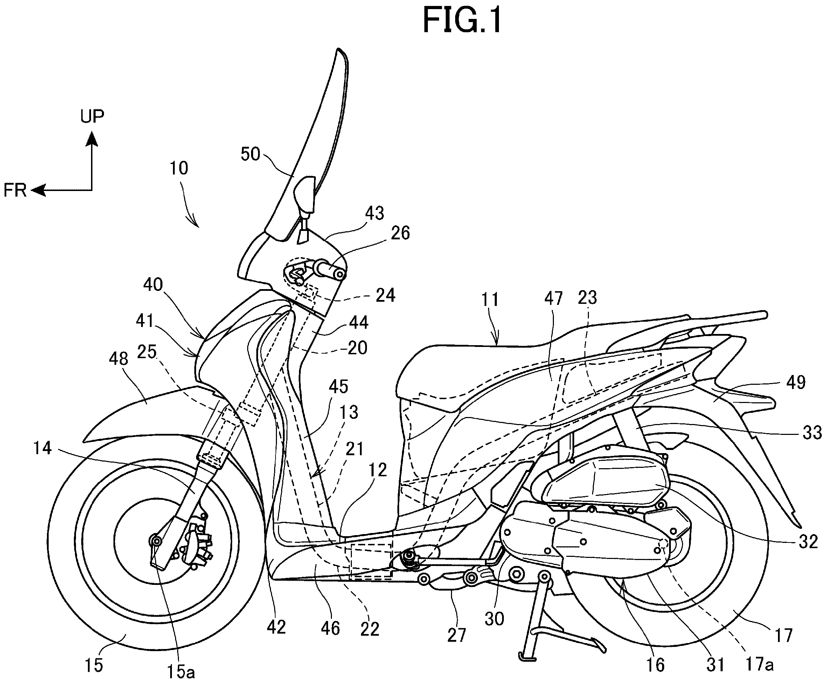

Fig. 1 is a left side view of a saddle-ride type vehicle according to the embodiment of the present invention.

A saddle-ride type vehicle 10 is a scooter type motorcycle including a seat 11 for an occupant and a low-slung floor step 12 on which feet of a rider who has been seated on the seat 11 are placed. The saddle-ride type vehicle 10 includes a body frame 13, a front wheel 15 supported by the body frame 13 via a pair of right and left front forks 14, 14, a unit-swing type power unit 16 supported by the body frame 13, and a rear wheel 17 supported by a rear end portion of the power unit 16.

The body frame 13 includes a head pipe 20 at a front end, one down frame 21 that extends downwardly toward the rear from the head pipe 20, a pair of right and left lower frames 22 that extend to right and left from a lower portion of the down frame 21 and then linearly extend toward the rear, a pair of right and left rear frames 23 that extend upwardly toward the rear integrally from rear ends of the right and left lower frames 22.

The head pipe 20 turnably supports a steering stem 24. A bottom bridge 25 is secured to a lower end of the steering stem 24. The front forks 14, 14 are supported by the bottom bridge 25 to extend forward and downward.

The front wheel 15 is journaled by a front wheel axle 15a that couples lower end portions of the right and left front forks 14, 14 in a vehicle width direction.

A steering handlebar 26 is secured to an upper end portion of the steering stem 24.

The power unit 16 is supported swingably in a vertical direction by rear end portions of the lower frames 22 via a link mechanism 27.

The power unit 16 includes an engine 30 and a transmission 31 disposed integrally at a rear portion of the engine 30.

The transmission 31 extends rearward through one side (a left side) in the vehicle width direction to journal the rear wheel 17 via a rear wheel axle 17a that extends from a rear end portion to the other side (a right side) in the vehicle width direction.

An air cleaner 32 that constitutes an intake system of the engine 30 is disposed on an upper side of the transmission 31.

An exhaust pipe (not illustrated) of the engine 30 is extracted to the other side in the vehicle width direction. A rear end portion of the exhaust pipe is coupled to a muffler (not illustrated) disposed at a right lateral side of the rear wheel 17.

A rear suspension 33 is disposed between the power unit 16 and rear portions of the rear frames 23.

The saddle-ride type vehicle 10 includes a vehicle body cover 40 that covers the body frame 13 and similar parts. The vehicle body cover 40 includes a front cover 41 that covers a front of the head pipe 20, a pair of right and left front lower covers 42 disposed continuous with a lower end of the front cover 41, and a handlebar cover 43 that covers a center portion of the steering handlebar 26.

Additionally, the vehicle body cover 40 includes a front inner cover 44 that covers rears of the head pipe 20 and the down frame 21, and a leg shield 45 that protrudes out to right and left from the front inner cover 44 to cover a front of legs of the rider.

Furthermore, the vehicle body cover 40 includes an undercover 46 that covers the lower frames 22 from a lower side, and a side cover 47 that covers outsides in the vehicle width direction of the right and left rear frames 23. Additionally, the vehicle body cover 40 includes a front fender 48 that covers an upside of the front wheel 15, and a rear fender 49 that covers a rear upside of the rear wheel 17.

A windshield 50 that extends rearward and upward in a vehicle body side view is disposed at a front upper portion of the handlebar cover 43.

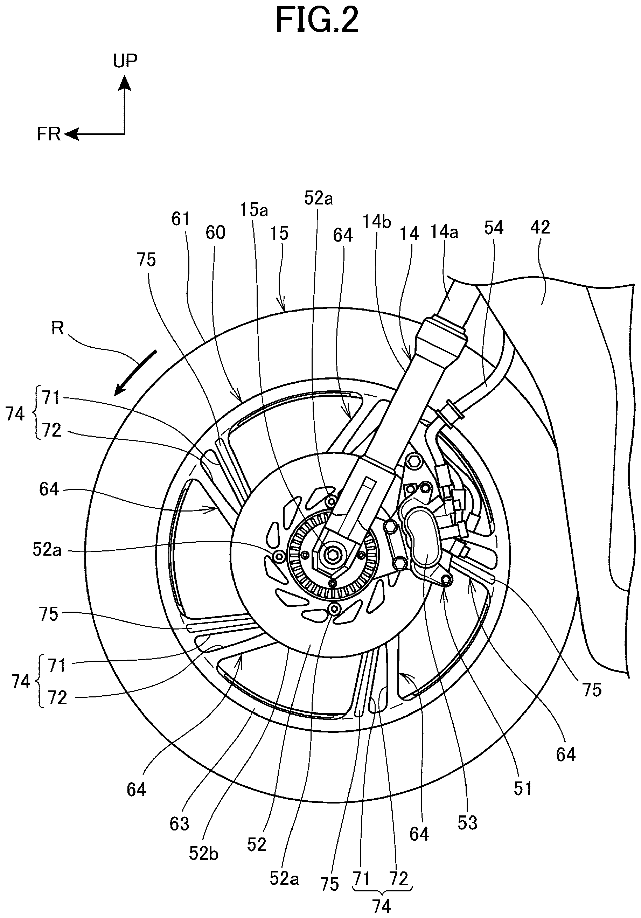

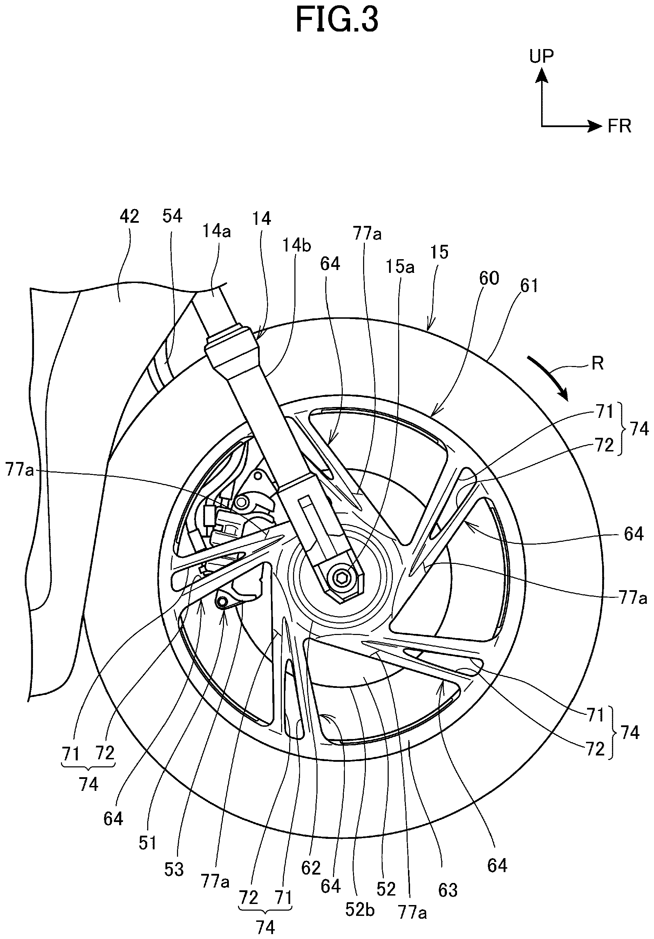

Fig. 2 is a left side view of a peripheral portion of the front wheel 15. Fig. 3 is a right side view of the peripheral portion of the front wheel 15.

Each front fork 14 includes an upper tube 14a secured to the bottom bridge 25 (Fig. 1), and a lower tube 14b strokable in an axial direction with respect to the upper tube 14a.

The front wheel 15 is disposed between the right and left lower tubes 14b, 14b to be journaled by the front wheel axle 15a inserted into lower end portions of the lower tubes 14b, 14b in the vehicle width direction.

The saddle-ride type vehicle 10 includes a hydraulic front wheel braking device 51 that brakes the front wheel 15. The front wheel braking device 51 includes a brake disc 52 secured to the front wheel 15, a caliper 53 that compresses the brake disc 52 by hydraulic pressure, a master cylinder (not illustrated) that generates the hydraulic pressure by an operation of a brake lever disposed at the steering handlebar 26, and a brake hose 54 that couples this master cylinder to the caliper 53.

The front wheel 15 includes a wheel 60 (a cast wheel) journaled by the front wheel axle 15a and a tire 61 installed at an outer peripheral section of the wheel 60.

The wheel 60 includes a hub 62 into which the front wheel axle 15a is inserted, a rim 63 disposed coaxially with the hub 62 to surround the hub 62 from an outer peripheral side, and a plurality of spokes 64 that extend in a radial direction of the wheel 60 to couple the hubs 62 to the rim 63.

Rotation directions of the front wheel 15 and the wheel 60 when the saddle-ride type vehicle 10 moves forward are a direction of a rotation direction R as illustrated with an arrow in the drawings.

The front wheel axle 15a is a shaft positioned at a rotational center of the wheel 60. An axial direction of the front wheel axle 15a corresponds to a width direction of the wheel 60.

The brake disc 52 is disposed at one side (a left side) in the vehicle width direction of the wheel 60. In detail, the brake disc 52 is secured to one side surface (a left side surface) of the hub 62 to rotate integrally with the wheel 60. The brake disc 52 is disposed between the hub 62 and the left side lower tube 14b in the vehicle width direction.

The caliper 53 is secured to a rear portion of a lower end portion of the left side lower tube 14b to be disposed across the brake disc 52. The brake hose 54 extends upward from the caliper 53 along the front fork 14 to be coupled to the above-described master cylinder.

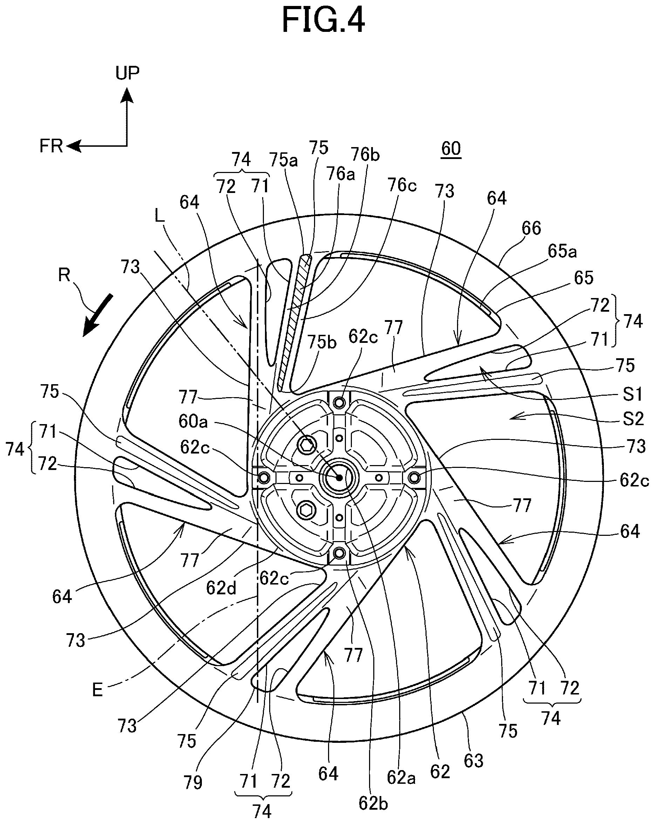

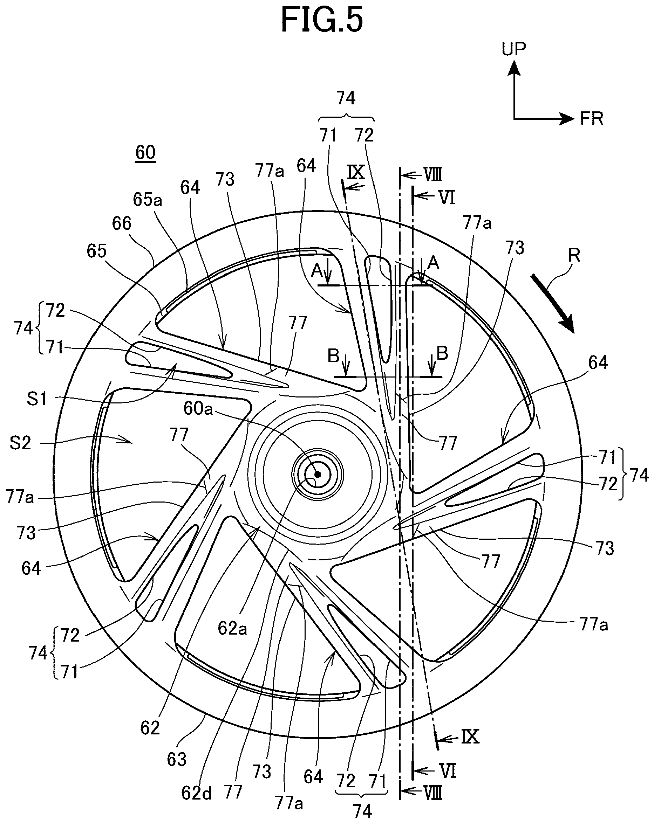

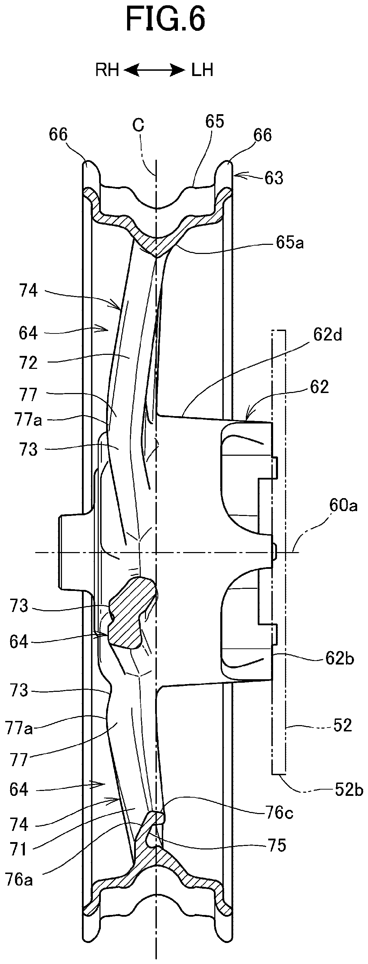

Fig. 4 is a left side view of the wheel 60. Fig. 5 is a right side view of the wheel 60. Fig. 6 is a cross-sectional view taken along line VI-VI in Fig. 5.

The wheel 60 is a cast wheel formed by casting metal such as aluminum alloy and magnesium alloy. The hub 62, the spoke 64, and the rim 63 are integrally formed by casting.

Referring to Fig. 4 to Fig. 6, the hub 62 is formed in an approximately cylindrical shape in side view, and the hub 62 includes an axle insertion hole 62a into which the front wheel axle 15a is inserted at a center. An axis 60a (a rotating axis of the cast wheel) of the axle insertion hole 62a extends in the vehicle width direction. The wheel 60 rotates centering this axis 60a. An axial direction of the axis 60a corresponds to the width direction of the wheel 60. Additionally, the width direction of the wheel 60 corresponds to the vehicle width direction (a right and left direction).

Additionally, the hub 62 includes a disc installation surface 62b at a left side surface, the disc installation surface 62b receiving an internal surface of the brake disc 52. The disc installation surface 62b protrudes outside in the vehicle width direction from a left side surface of the rim 63. At the disc installation surface 62b, a plurality of fastening portions 62c are disposed, the plurality of fastening portions 62c being fastened to securing bolts 52a (Fig. 2) that secure the brake disc 52.

The rim 63 includes an annular rim main body 65 disposed so as to be opposed to an outer peripheral surface 62d of the hub 62 to surround the hub 62, and vertical wall portions 66, 66 arranged upright outside in the radial direction from both side edges in the vehicle width direction of the rim main body 65. The tire 61 is installed at an outer periphery of the rim 63.

The rim main body 65 includes a bulge portion 65a at a center in the vehicle width direction, the bulge portion 65a bulging inward in the radial direction. The bulge portion 65a and the vertical wall portions 66, 66 are formed over a whole circumference of the rim 63.

Each spoke 64 extends outside in the radial direction from the outer peripheral surface 62d of the hub 62 to be coupled to an inner peripheral surface of the bulge portion 65a of the rim 63.

Each spoke 64 is configured to include a lightened spoke 71 whose inside is lightened, a solid spoke 72 whose inside is not lightened, and a coupling portion 73 that couples the lightened spoke 71 to the solid spoke 72 at a position at side of the hub 62.

At each spoke 64, the lightened spoke 71 and the solid spoke 72 are arranged adjacent to one another to form paired spokes 74 where the lightened spoke 71 and the solid spoke 72 extend in the radial direction in an adjacent state. More specifically, each spoke 64 includes the paired spokes 74 and the coupling portion 73.

The coupling portion 73 is formed at the outer peripheral surface 62d of the hub 62. The paired spokes 74 extend outside in the radial direction from the coupling portion 73 to be coupled to the bulge portion 65a of the rim 63. The coupling portion 73 is formed so as to couple the lightened spoke 71 to the solid spoke 72 which extend to the hub 62 from the rim 63 in the vicinity in the direction of the rotation direction R at a proximity of the rim 63. In view of this, the coupling portion 73 has a thickness equal to or more than two thicknesses combining the lightened spoke 71 with the solid spoke 72, in the direction of the rotation direction R.

The respective paired spokes 74 and coupling portions 73 are disposed at regular intervals from one another, in a peripheral direction of the wheel 60, more specifically, in the direction of the rotation direction R. According to the embodiment, the spokes 64 are equally disposed at five sites. The respective spokes 64 have mutually identical shapes.

As illustrated in Fig. 5, a space S1 in the peripheral direction between the lightened spoke 71 and the solid spoke 72 is smaller than a space S2 in the peripheral direction between the spoke 64 and the spoke 64 adjacent to one another.

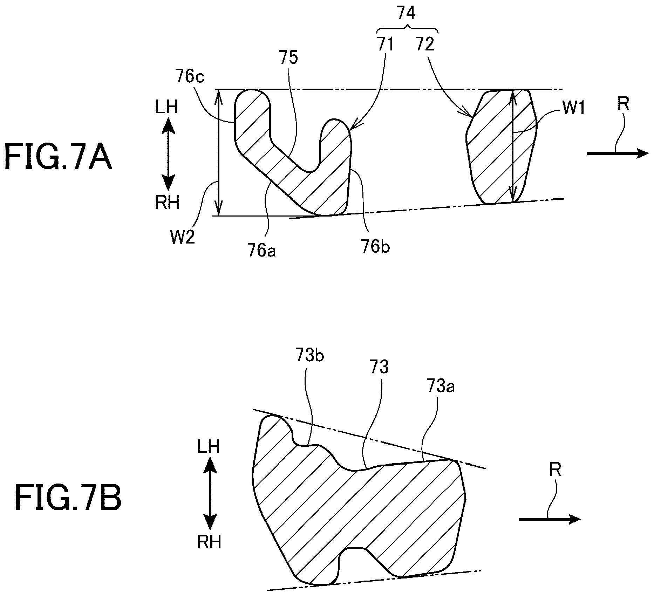

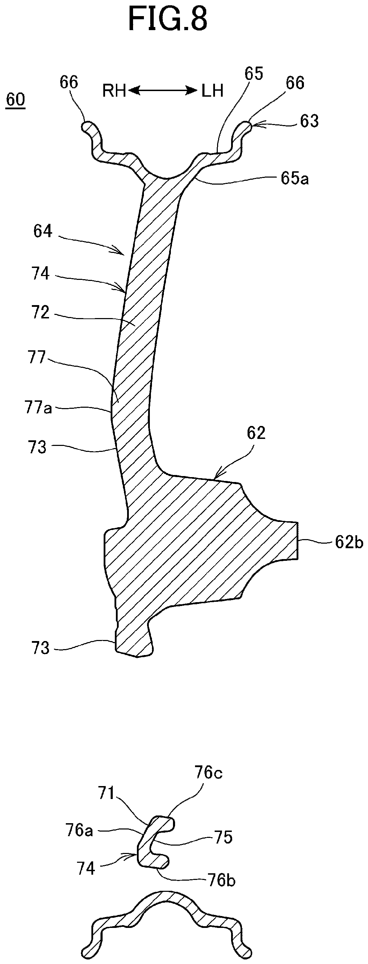

Fig. 7A is a cross-sectional view of the spoke 64, and a cross-sectional view taken along line A-A in Fig. 5. Fig. 7B is a cross-sectional view of the spoke 64, and a cross-sectional view taken along line B-B in Fig. 5. Fig. 8 is a cross-sectional view taken along line VIII-VIII in Fig. 5.

Referring to Fig. 4 to Fig. 8, the lightened spoke 71 includes a lightening portion 75 at a left side surface, more specifically, at a side surface at a side at which the brake disc 52 is disposed. The lightening portion 75 is a recess formed such that an outer surface of the lightened spoke 71 is recessed in the width direction of the wheel 60. The lightening portion 75 is opened at a side of the brake disc 52. The lightened spoke 71 includes, at a part of the lightening portion 75, a bottom wall portion 76a to be a bottom portion of the lightening portion 75, and wall portions 76b, 76c arranged upright from a front end and a rear end in the direction of the rotation direction R at the bottom wall portion 76a. A distal end of the forward wall portion 76b is positioned inside in the vehicle width direction with respect to a distal end of the rearward wall portion 76c. The lightening portion 75 ensures rigidity of the wheel 60 while ensuring the weight reduction of the wheel 60.

Note that, in Fig. 4, an area of the lightening portion 75 is clearly illustrated with hatching the lightening portion 75 at a represent one site.

An outer end 75a in the radial direction of the lightening portion 75 is positioned overlapping the bulge portion 65a of the rim 63 in side view. An inner end 75b in the radial direction of the lightening portion 75 is positioned overlapping an outside end portion of the coupling portion 73 in the radial direction in side view. The lightening portion 75 is continuously disposed from the outer end 75a to the inner end 75b, and a width in side view of the lightening portion 75 decreases toward the inner end 75b.

The solid spoke 72 is formed in a solid rod shape where a lightening portion is not disposed at an outer surface in the width direction of the wheel 60, between the bulge portion 65a of the rim 63 and the coupling portion 73.

As illustrated in Fig. 4 and Fig. 5, the spoke 64 extends linearly from the hub 62 to the rim 63, and the spoke 64 is disposed inclined in the direction of the rotation direction R with respect to a virtual straight line L (Fig. 4) that couples the axle insertion hole 62a to the rim 63 in side view. In detail, the spoke 64 is disposed inclined backward such that an end portion at a side of the rim 63 is positioned at a rear side in the direction of the rotation direction R.

Additionally, the lightened spoke 71 is positioned at a rear of the solid spoke 72 in the direction of the rotation direction R, and the lightened spoke 71 is inclined backward larger than the solid spoke 72 with respect to the virtual straight line L.

More specifically, the solid spoke 72 is positioned ahead of the lightened spoke 71 in the direction of the rotation direction R to cut through travelling air from the front ahead of the lightened spoke 71.

As illustrated in Fig. 7A, a width W1 of the solid spoke 72 is formed thinner than a width W2 of the lightened spoke 71 in the width direction (in the axial direction of the axis 60a of the wheel 60) of the wheel 60.

Additionally, as illustrated in Fig. 7B, the coupling portion 73 is formed such that a front portion 73a in the direction of the rotation direction R is thinner than a rear portion 73b in the direction of the rotation direction R, in the width direction of the wheel 60.

More specifically, the paired spokes 74 and the coupling portion 73 are formed such that forward parts in the direction of the rotation direction R are thinner than backward parts in the direction of the rotation direction R, in the width direction. In view of this, the spoke 64 can effectively cut through the travelling air to ensure reduction of rotational load of the wheel 60.

Additionally, the lightened spoke 71 including the lightening portion 75 is positioned at the rear of the solid spoke 72 in the direction of the rotation direction R; thus, the travelling air becomes hard to enter the lightening portion 75. This can reduce turbulence of the travelling air that occurs at the lightening portion 75 to ensure the reduction of the rotational load of the wheel 60.

As illustrated in Fig. 6 and Fig. 8, when viewing from the front side in the peripheral direction, the spoke 64 is disposed offset in the vehicle width direction to a side opposite to the brake disc 52 side, with respect to a centerline C (Fig. 6) in the vehicle width direction of the rim 63.

The coupling portion 73 is offset in the vehicle width direction to the side opposite to the brake disc 52 side. The paired spokes 74 entirely incline with approaching the centerline C, toward the rim 63 side.

In detail, the spoke 64 includes an arched portion 77 that protrudes in an arched shape to the side opposite to the brake disc 52 side, at a part in the middle of a longitudinal direction of the spoke 64, when viewing from the front side in the peripheral direction. The arched portion 77 includes an arched top portion 77a where this arched portion 77 protrudes most in the width direction, at the coupling portion 73. The arched top portion 77a is positioned inside in the vehicle width direction from an outer surface of the rim 63.

The spoke 64 inclines so as to be positioned outside in the vehicle width direction toward an outside in the radial direction of the wheel 60, from the outer peripheral surface 62d of the hub 62 to the arched top portion 77a. Additionally, the spoke 64 inclines so as to be positioned inside in the vehicle width direction toward the outside in the radial direction of the wheel 60, from the arched top portion 77a to the rim 63. More specifically, the spoke 64 curves in the arched shape to the side opposite to the brake disc 52 side, on the whole.

In this manner, the spoke 64 includes the arched portion 77 to curve in the arched shape; thus, the spoke 64 elastically deflects to ensure effective absorption of load that the wheel 60 receives.

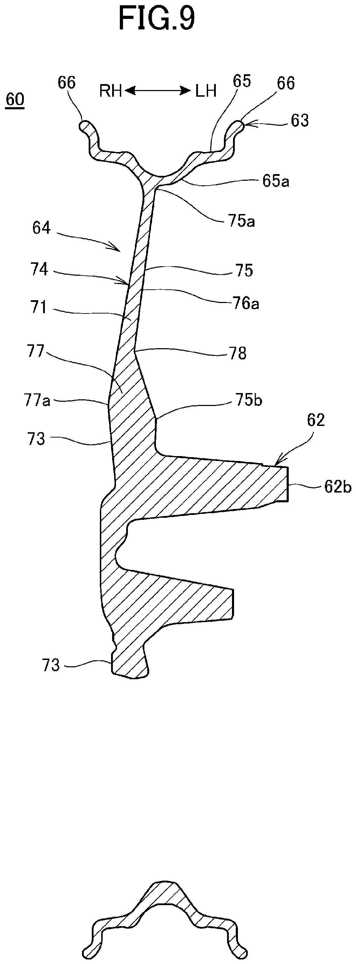

Fig. 9 is a cross-sectional view taken along line IX-IX in Fig. 5.

As illustrated in Fig. 5 and Fig. 9, the lightened spoke 71 includes a lightening deep portion 78 where a depth of the lightening portion 75 is deepest in the width direction of the wheel 60. The lightening deep portion 78 is disposed outside of the arched top portion 77a in the radial direction of the wheel 60.

The lightening portion 75 is formed gradually deepening toward the outside in the radial direction of the wheel 60, from the inner end 75b to the lightening deep portion 78. Additionally, the lightening portion 75 is formed gradually shallowing toward the outside in the radial direction of the wheel 60, from the lightening deep portion 78 to the outer end 75a.

In this manner, the lightening deep portion 78 is disposed outside of the arched top portion 77a in the radial direction of the wheel 60. This ensures thickness of the coupling portion 73 while ensuring a removed amount of the lightening portion 75 to ensure strength of the spoke 64.

Additionally, as illustrated in Fig. 5 and Fig. 9, the coupling portion 73 at which the arched portion 77 is formed is formed thicker than the lightened spoke 71 and the solid spoke 72, in the width direction of the wheel 60 and in the direction of the rotation direction R. This ensures increasing strength of the arched portion 77 to effectively absorb the load that the wheel 60 receives.

As illustrated in Fig. 2 and Fig. 3, the circular plate-shaped brake disc 52 is disposed at a side surface at a side at which the lightening portion 75 is disposed, in side surfaces of the wheel 60. In detail, in side view, an outer peripheral section 52b of the brake disc 52 overlaps the lightening portion 75 from outside, and the brake disc 52 covers a part of the lightening portion 75 from outside.

Accordingly, the brake disc 52 can hide a part of the lightening portion 75 to ensure a simple appearance of the wheel 60, thus improving an external appearance of the wheel 60.

Additionally, the paired spokes 74 are not lightened at a side surface opposite to the lightening portion 75. The side surface opposite to the lightening portion 75 is not covered with the brake disc 52 from outside. This ensures the simple appearance of the wheel 60 to make a good external appearance of the wheel 60.

Additionally, according to the embodiment, at one paired spokes 74, the lightening portion 75 is disposed only at the lightened spoke 71; thus, the number of the lightening portions 75 is totally small at the wheel 60. In view of this, the lightening portions 75 are obscure to make the good external appearance. Additionally, at the lightening portion 75, for example, dust easily accumulates. It is difficult to clean, for example, the accumulated dust since the lightening portion 75 is deep. According to the embodiment, the number of the lightening portions 75 is small. Accordingly, it is easy to clean to ensure easily maintaining a clear appearance.

Additionally, referring to Fig. 6, the arched portion 77 protrudes to a lateral side opposite to the brake disc 52, thus ensuring disposing the brake disc 52 near a center side in the vehicle width direction to dispose the brake disc 52 compactly.

Further, as illustrated in Fig. 4, an extended line E extended from the solid spoke 72 of the one spoke 64 to an extended direction of the solid spoke 72 intersects with a connector 79 of the spoke 64 and the rim 63 at another spoke 64. In this manner, disposing the connector 79 of another spoke 64 on the extended line E of the one spoke 64 ensures equalizing the load applied to the spokes 64.

As described above, according to the embodiment to which the present invention is applied, the wheel 60 includes the spoke 64 that couples the hub 62 to the rim 63, the spoke 64 includes the lightened spoke 71 whose inside is lightened and the solid spoke 72 whose inside is not lightened, and the paired spokes 74 where the lightened spokes 71 and the solid spokes 72 are adjacent are equally spaced in the peripheral direction. Accordingly, the paired spokes 74 including the lightened spoke 71 and the solid spoke 72 ensures rigidity. The solid spoke 72 is not lightened; thus, the lightening portion 75 is obscure for the paired spokes 74 to ensure improvement of the external appearance.

Additionally, in the axial direction of the axis 60a of the wheel 60, the width W1 of the solid spoke 72 is formed thinner than the width W2 of the lightened spoke 71, and the solid spoke 72 is disposed ahead of the lightened spoke 71 in the direction of the rotation direction R of the wheel 60. Accordingly, the thin solid spoke 72 is positioned ahead of the lightened spoke 71 in the direction of the rotation direction R of the cast wheel. The thin solid spoke 72 can effectively cut through the travelling air to ensure the reduction of the rotational load of the wheel 60.

Additionally, the spoke 64 includes the arched portion 77 that protrudes in the arched shape in the axial direction of the axis 60a of the wheel 60 to ensure the effective absorption of the load that the wheel 60 receives, at the arched portion 77.

Furthermore, the spoke 64 includes the coupling portion 73 that couples the solid spoke 72 to the lightened spoke 71, the coupling portion 73 is formed thicker than the solid spoke 72 and the lightened spoke 71, and the arched portion 77 is formed at the coupling portion 73. This ensures increasing the strength of the arched portion 77 to effectively absorb the load that the wheel 60 receives, at the arched portion 77.

Additionally, the lightening deep portion 78 where the lightening portion 75 of the lightened spoke 71 is deepest in the axial direction of the axis 60a of the wheel 60 is formed at the rim 63 side of the arched top portion 77a where the arched portion 77 protrudes most in the axial direction of axis 60a. This prevents a part at a side of the arched top portion 77a, at the lightening portion 75 from excessively deepening to ensure strength of the coupling portion 73.

Additionally, the saddle-ride type vehicle 10 includes the wheel 60 and the brake disc 52. The brake disc 52 is secured to a side of the lightening portion 75 of the lightened spoke 71, of the wheel 60; thus, the brake disc 52 can hide the lightening portion 75 to ensure the improvement of the external appearance.

While the above-described embodiment has described an example of the wheel 60 of the front wheel 15, the configuration of the present invention is obviously applicable to a wheel of the rear wheel 17.

Additionally, while the above-described embodiment has described an example of the saddle-ride type vehicle 10 which is a motorcycle as a saddle-ride type vehicle, the present invention is not limited to this. For example, the present invention may be applicable to a three-wheel saddle-ride type vehicle including two front wheels or two rear wheels, and a saddle-ride type vehicle including four or more wheels.

### [Problem]

To improve an external appearance while ensuring rigidity of a cast wheel at the cast wheel and a saddle-ride type vehicle including the cast wheel.

### [Solution]

A cast wheel according to the features of independent claim 1.

### [Reference Signs List]

- 10 ...: Saddle-ride type vehicle
- 52 ...: Brake disc
- 60 ...: Wheel (Cast wheel)
- 60a ...: Axis (Rotating axis of cast wheel)
- 62 ...: Hub
- 63 ...: Rim
- 64 ...: Spoke
- 71 ...: Lightened spoke
- 72 ...: Solid spoke
- 73 ...: Coupling portion
- 74 ...: Paired spokes
- 77 ...: Arched portion
- 77a ...: Arched top portion
- 78 ...: Lightening deep portion
- R ...: Rotation direction
- W1 ...: Width (Width of solid spoke)
- W2 ...: Width (Width of lightened spoke)

## Claims

1. A cast wheel (60) comprising a plurality of paired spokes (74) that couple a hub (62) to a rim (63), and that include a lightened spoke (71) whose inside is lightened by comprising a lightening portion (75), which is a recess formed such that an outer surface of the lightened spoke (71) is recessed in the width direction of the wheel (60), and a solid spoke (72) whose inside is not lightened, wherein
the lightened spoke (71) is adjacent to the solid spoke (72) and the paired spokes (74) are equally spaced in a peripheral direction.

2. The cast wheel according to claim 1, wherein:
in an axial direction of a rotating axis (60a) of the cast wheel, a width (W1) of the solid spoke (72) is formed thinner than a width (W2) of the lightened spoke (71), and
the solid spoke (72) is disposed ahead of the lightened spoke (71) in a rotation direction (R) of the cast wheel.

3. The cast wheel according to claim 1 or 2, wherein
the paired spoke (74) include an arched portion (77) that protrudes in an arched shape in an axial direction of a rotating axis (60a) of the cast wheel.

4. The cast wheel according to claim 3, wherein:
The paired spokes (74) include a coupling portion (73) that couples the solid spoke (72) to the lightened spoke (71),
the coupling portion (73) is formed thicker than the solid spoke (72) and the lightened spoke (71), and
the arched portion (77) is formed at the coupling portion (73).

5. The cast wheel according to claim 3 or 4, wherein
a lightening deep portion (78) where a removal of the lightened spoke (71) is deepest in the axial direction of the rotating axis (60a) of the cast wheel is formed at a side of the rim (63) with respect to an arched top portion (77a) where the arched portion (77) protrudes most in the axial direction.

6. A saddle-ride type vehicle comprising:
the cast wheel according to any one of claims 1 to 5; and
a brake disc (52), wherein
the brake disc (52) is secured to a lightening side of the lightened spoke (71) of the cast wheel.

## Patentansprüche

1. Gussrad (60), das eine Mehrzahl von paarigen Speichen (74) aufweist, die eine Nabe (62) mit einer Felge (63) verbinden, und die eine erleichterte Speiche (71) enthalten, deren Innenseite durch einen Erleichterungsabschnitt (75) erleichtert ist, der eine derart ausgebildete Vertiefung ist, dass eine Außenoberfläche der erleichterten Speiche (71) in der Breitenrichtung des Rads (60) vertieft ist, und eine massive Speiche (72), deren Innenseite nicht erleichtert ist, wobei
die erleichterte Speiche (71) der massiven Speiche (72) benachbart ist und die paarigen Speichen (74) in Umfangsrichtung gleiche Abstände voneinander haben.

2. Das Gussrad nach Anspruch 1, wobei
in axialer Richtung einer Drehachse (60a) des Gussrads, eine Breite (W1) der massiven Speiche (72) dünner ausgebildet ist als eine Breite (W2) der erleichterten Speiche (71), und
die massive Speiche (72), in Drehrichtung (R) des Gussrads, vor der erleichterten Speiche (71) angeordnet ist.

3. Das Gussrad nach Anspruch 1 oder 2, wobei die paarigen Speichen (74) einen Bogenabschnitt (77) enthalten, der bogenförmig in axialer Richtung einer Drehachse (60a) des Gussrads vorsteht.

4. Das Gussrad nach Anspruch 3, wobei:
die paarigen Speichen (74) einen Verbindungsabschnitt (73) enthalten, der die massive Speiche (72) mit der erleichterten Speiche (71) verbindet,
der Verbindungsabschnitt (73) dicker ausgebildet ist als die massive Speiche (72) und die erleichterte Speiche (71), und
der Bogenabschnitt (77) an dem Verbindungsabschnitt (73) ausgebildet ist.

5. Das Gussrad nach Anspruch 3 oder 4, wobei ein erleichterter tiefer Abschnitt (78), wo eine Ausnehmung der erleichterten Speiche (71) in der axialen Richtung der Drehachse (60a) des Gussrads am tiefsten ist, in Bezug auf einen oberen Bogenabschnitt (77a) an einer Seite der Felge (63) ausgebildet ist, wo der Bogenabschnitt (77) in der axialen Richtung am weitesten vorsteht.

6. Aufsitzsattel-Fahrzeug, welches aufweist:
ein Gussrad nach einem der Ansprüche 1 bis 5; und
eine Bremsscheibe (52), wobei die Bremsscheibe (52) an einer erleichterten Seite der erleichterten Speiche (71) des Gussrads gesichert ist.

## Revendications

1. Roue coulée (60) comprenant une pluralité de rayons appariés (74) qui couplent un moyeu (62) à une jante (63), et qui comprennent un rayon allégé (71) dont l'intérieur est allégé en comprenant une portion d'allègement (75), qui est un évidement formé de sorte qu'une surface externe du rayon allégé (71) est évidée dans le sens de largeur de la roue (60), et un rayon plein (72) dont l'intérieur n'est pas allégé, dans laquelle
le rayon allégé (71) est adjacent au rayon plein (72) et les rayons appariés (74) sont espacés de manière égale dans une direction périphérique.

2. Roue coulée selon la revendication 1, dans laquelle :
dans une direction axiale d'un axe de rotation (60a) de la roue coulée, une largeur (W1) du rayon plein (72) est formée plus mince qu'une largeur (W2) du rayon allégé (71), et
le rayon plein (72) est disposé en avant du rayon allégé (71) dans un sens de rotation (R) de la roue coulée.

3. Roue coulée selon la revendication 1 ou 2, dans laquelle
les rayons appariés (74) comprennent une portion arquée (77) qui fait saillie dans une forme arquée dans une direction axiale d'un axe de rotation (60a) de la roue coulée.

4. Roue coulée selon la revendication 3, dans laquelle :
les rayons appariés (74) comprennent une portion de couplage (73) qui couple le rayon plein (72) au rayon allégé (71),
la portion de couplage (73) est formée plus épaisse que le rayon plein (72) et le rayon allégé (71), et
la portion arquée (77) est formée au niveau de la portion de couplage (73).

5. Roue coulée selon la revendication 3 ou 4, dans laquelle
une portion profonde d'allègement (78) où un retrait du rayon allégé (71) est le plus profond dans la direction axiale de l'axe de rotation (60a) de la roue coulée est formée au niveau d'un côté de la jante (63) vis-à-vis d'une portion supérieure arquée (77a) où la portion arquée (77) fait le plus saillie dans la direction axiale.

6. Véhicule de type à selle comprenant :
la roue coulée selon l'une quelconque des revendications 1 à 5 ; et
un disque de frein (52), dans lequel
le disque de frein (52) est fixé à un côté d'allègement du rayon allégé (71) de la roue coulée.
